# EUROPÄISCHE PATENTSCHRIFT

(11) **EP 3 129 305 B1**
(45) Veröffentlichungstag und Bekanntmachung des Hinweises auf die Patenterteilung: **21.11.2018**
(21) Anmeldenummer: 15744464.7
(22) Anmeldetag: 08.04.2015
(51) Int. Cl.: B65G 1/04

(54) **REGALBEDIENGERÄT**
STORAGE AND RETRIEVAL MACHINE
TRANSTOCKEUR

(30) Priorität: 08.04.2014 AT 2642014
(43) Veröffentlichungstag der Anmeldung: 15.02.2017
(73) Patentinhaber: Swisslog Evomatic GMBH, 4621 Sipbachzell (AT)
(72) Erfinder: ASCHAUER, Herbert, A-4600 Wels (AT)
(74) Vertreter: Ellmeyer, Wolfgang
(86) Internationale Anmeldenummer: PCT/AT2015/050091
(87) Internationale Veröffentlichungsnummer: WO 2015/154116

(56) Entgegenhaltungen:
- EP-A1- 0 733 563
- EP-A1- 1 772 400
- EP-A2- 1 591 410
- WO-A1-2010/090515
- CH-A- 523 848
- DE-A1- 1 456 557

## Beschreibung

Die Erfindung betrifft ein Regalbediengerät zur Ein- und Auslagerung eines Ladeguts in ein Regal bzw. aus diesem mit einem Horizontal- und einem Vertikalantrieb sowie einem Hubschlitten, der eine Lastaufnahmeeinheit mit mehreren nebeneinander angeordneten und einzeln steuerbaren Teleskopaufnahmefingern sowie diesen zugeordneten Fördereinrichtungen umfasst.

Regalbediengeräte mit mehreren nebeneinander angeordneten teleskopierbaren Fingern ermöglichen die Handhabung unterschiedlicher Gebindeformen und kommen bei Hochregallagern, insbesondere bei automatischen Kleinteillagern (AKL) mit bevorzugt Winkel- oder U-Profil-Fachböden in sogenannten Warenverteilzentren (Großlager bzw. auch unter dem Begriff "Retailer" bekannt) zum Einsatz. Dabei werden zunächst angelieferte sortenreine Warenpaletten aufgeteilt und in freie Lagerbereiche eingelagert, um zu einem späteren Zeitpunkt für die Zusammenstellung definierter Ladeeinheiten unterschiedlicher Art und Menge wieder entnommen zu werden.

Durch die große Artikelvielfalt bei eher geringen Stückzahlen pro Artikel steigen bei diesen Sammel- und Verteillagern die Anforderungen hinsichtlich Umschlagleistung sowie Flexibilität in Bezug auf unterschiedliche Gebindeformen ständig an. Zusätzlich wird großes Augenmerk auch auf geringe Regalgassenbreiten (Ganglichte) gerichtet, um zusätzlich auch eine Herabsetzung der Lagerkosten zu erzielen.

Bei bisher bekannten Regalbediengeräten mit Teleskopaufnahmefingern kann aber oftmals aus Stabilitätsgründen durch die erforderliche Mindestüberlappung der Teleskopelemente eine bestimmte Baubreite nicht unterschritten werden, um auch kleine Gebinde in rückwärtigen Regalbereichen sicher zu erfassen, wie aus der WO 2010/090515 A1 ersichtlich oder es können, wie beispielsweise aus der WO 2009/150684 A1 hervorgeht, die Teleskopaufnahmefinger nur mit einem relativ großen Querschnitt gestaltet werden, sodass diese Ausführungen teuer und für bestimmte Anwendungen nicht geeignet sind.

Generell sind in der Lagertechnik Lastaufnahmemittel mit Teleskoparmen bekannt, welche das Ladegut beim Einlagern absenken bzw. beim Auslagern anheben.

Weiters sind bei automatischen Kleinteillagern (AKL) auch Lastaufnahmemittel bekannt, welche das Ladegut ohne Anheben aus dem Lagerregal herausziehen. Dies hat jedoch den Nachteil, dass die gelagerten Artikel eine einheitlich definierte geometrische Form aufweisen müssen oder zusätzlich Ladehilfsmittel, wie Behälter, Tablare oder Kartons benötigt werden.

In der EP 1 772 400 A1 ist ein vorgenanntes Regalbediengerät mit Teleskoparmen gezeigt, die jeweils ein Tragteil, ein Mittelteil und ein Innenteil aufweisen. Durch Riemen mit Umlenkrädern wird bei einem Verschieben des Mittelteils um ein bestimmtes Ausmaß das Innenteil bezüglich des Mittelteils noch zusätzlich um dasselbe Ausmaß weiter verschoben. Sowohl der Aufbau des Mittelteilantriebs als auch der des Teleskoparmquerschnitts sind relativ kompliziert und ausfallanfällig. Es können mit ihnen nur geringe Auszugslängen erreicht werden.

In der AT 505 757 A4 ist ein Hubwagen mit einem Teleskopauszug gezeigt, der einen ersten und einen zweiten Teleskopteil aufweist, wobei der erste Teleskopteil durch eine Stützrolle abgestützt ist und eine Profilschiene aufweist, in der eine lineare Wälzlagereinheit geführt ist. Der Antrieb des ersten und zweiten Teleskopteils erfolgt über eine an der Unterseite des ersten Teleskopteils angebrachte Zahnstange, in welche ein Antriebsritzel einer Antriebseinrichtung eingreift. Die maximale Auszugslänge ist aufgrund des kurzen zweiten Teleskopteils relativ klein.

Gemäß EP 1 591 410 A2 wird ein äußerer Teil eines Teleskoparmes über eine Schneckenschraube angetrieben, die innerhalb des Teleskoparmprofils gelagert ist und daher eine entsprechende Querschnittsvergrößerung bewirkt.

Die WO2010/090515 A1 offenbart ein Regalbediengerät zur Ein- und Auslagerung eines Ladegutes in ein Regal mit mehreren nebeneinander angeordneten, steuerbaren Teleskopaufnahmefingern nach dem Oberbegriff des Anspruchs 1.

Die DE 14 56 557 A1 offenbart einen Teleskopfinger mit einem Mittelfinger- und einem Endfingerelement, mit dem eine geringere Regalgassenbreite ermöglicht wird.

Weiters zeigt auch die CH 523 848 A einen derartigen Teleskopfinger.

Aufgabe der Erfindung ist es daher, ein Regalbediengerät anzugeben, das eine kompakte Bauweise mit hoher Stabilität im ausgefahrenen Zustand der Teleskopfinger und eine möglichst geringe Baubreite ermöglicht, um sehr kleine Regalabstände (Ganglichten) verwirklichen zu können.

Weitere Aufgabe der Erfindung ist es, ein Regalbediengerät mit einem kleinen Teleskopfingerquerschnitt und einem kleinen Abstand zwischen den Teleskopfingern anzugeben, um eine hohe Flexibilität hinsichtlich der Handhabung unterschiedlicher Gebinde und Fachbodenformen zu gewährleisten.

Weitere Aufgabe der Erfindung ist die Schaffung eines robusten und zuverlässigen Antriebs für den Vorschub der Teleskopfinger anzugeben, der platzsparend aufgebaut werden kann.

Die Lösung dieser Aufgabe erfolgt durch die Merkmale des Anspruchs 1.

Auf der Grundlage dieser Führung der ausfahrbaren Elemente der Teleskopaufnahmefinger durch das Zusammenwirken eines auf dem oder im Mittelfingerelement angeordneten Kopplungselements und der in dieses eingreifenden Trägerelements und des Endfingerelements lässt sich eine sehr schmale kompakte Bauweise der einzelnen Teleskopaufnahmefinger erzielen und der Antrieb für den Vorschub der einzelnen Elemente beim Ausfahr- und Einziehvorgang kann mit sehr kleinen Dimensionen gestaltet werden.

Durch die kompakte und niedrige Bauhöhe der Teleskopaufnahmefinger und folglich auch des Lastaufnahmemittels können insbesondere die Platzverhältnisse am untersten Fachboden bestmöglich genutzt werden.

Im Vergleich zum Herausziehen bzw. Einschieben in das Lagerregal erfolgt der Transport beim erfindungsgemäßen Regalbediengerät durch Anheben bzw. Absenken beim Ein- und Auslagern und somit wesentlich schonender. Es können somit auch höhere Gebinde mit kleinem Querschnitt und erhöhtem Schwerpunkt problemlos gehandhabt werden. Auch ein ebener Gebindeboden ist nicht unbedingt erforderlich und es können unförmige Gebinde, wie z.B. in Folie eingeschweißte Flaschengebinde, wie z.B. 6er-Pack, ohne Schwierigkeiten ein- und ausgelagert werden. Dadurch ergibt sich bei kleineren Artikeln die Möglichkeit, ohne Ladehilfsmittel, wie Behälter, Tablare oder Kartons auszukommen.

Das auf dem Mittelfingerelement gelagerte zumindest eine Zahnrad greift somit sowohl in das Trägerelement als auch in das Endfingerelement ein, wodurch die Umsetzung der Bewegung des Mittelfingerelements in eine gleichgerichtete zusätzliche Bewegung des Endfingerelements erfolgt.

Durch die Anordnung von Trägerelement sowie Mittelfinger- und Endfingerelement eines jeden Teleskopfingers kann aufgrund der dadurch erzielten gegenseitigen Abstützung auch eine hohe Stabilität im ausgefahrenen Zustand bei äußerst geringer Baubreite des erfindungsgemäßen Regalbediengeräts im eingezogenen Zustand der Teleskopfinger gewährleistet werden.

Durch das Zusammenspiel von auf gegenüberliegenden Seiten der Teleskopaufnahmefinger-Elemente angeordneten Führungsrollen und Führungsprofilen wird eine gut gleitende Verschiebung dieser platzsparend nebeneinander angeordneten Elemente beim Ausfahr- und Einziehvorgang der einzelnen Teleskopaufnahmefinger erreicht.

Eine besonders stabile und robuste Führung ergibt sich dadurch, dass erfindungsgemäß die Führungsprofile einen C-förmigen Querschnitt aufweisen, und dass die Führungsrollen als Kegelstumpfrollen ausgebildet sind, die mit ihren Kegelstumpfflächen an korrespondierenden Innenflächen der Führungsprofile anliegen. Die Durchbiegung der einzelnen Teleskopaufnahmefinger-Elemente unter Gewichtsbelastung kann auf diese Weise wirkungsvoll verhindert werden.

Durch die Nebeneinander-Anordnung des Trägerelements, des Mittelfingerelements und des Endfingerelements kann auf sonst übliche ineinander geschobene Rohrquerschnitte verzichtet werden, die relativ große Dimensionen erfordern.

Aufgrund der Zahnradübersetzung kann bei einem Ausführungsbeispiel des erfindungsgemäßen Regalbediengeräts das Endfingerelement einen doppelt so großen Verfahrweg wie das Mittelfingerelement aufweisen, wodurch eine nahezu 100%ige Ausnutzung des Aus- und Einlagerungsweges erreicht wird und dies zusätzlich zu einer Steigerung der Verfahrgeschwindigkeit führt.

Da die Zahnstangenbereiche des Trägerelements und des Endfingerelements einander gegenüberliegend angeordnet sind, kann gemäß einer bevorzugten Ausführungsform der Erfindung die Drehachse des Zahnrads sich senkrecht zur Längsachse und in der Ebene des Mittelfingerelements erstrecken.

Der Vorschub der einzeln ansteuerbaren Teleskopaufnahmefinger kann in beide Richtungen quer zur Verfahrrichtung des erfindungsgemäßen Regalbediengeräts erfolgen, weshalb es sich als günstig erwiesen hat, gemäß einer weiteren Ausbildung der Erfindung das Zahnrad auf halber Länge des Mittelfingerelements anzuordnen, um in beiden Richtungen dieselbe Ausfahrweglänge zuzulassen.

Im Rahmen der Erfindung kann der Aufbau des Kopplungselements in verschiedener Weise gestaltet sein, um die Funktion des Umsetzens der Bewegung auf das Endfingerelement zu erzielen.

So kann gemäß einer weiteren Ausführungsform vorgesehen sein, dass das zumindest eine Zahnrad durch drei oder mehrere miteinander gepaarte Zahnräder gebildet ist, wobei die Zahnräder in der Öffnung drehbar gelagert sind, von denen zumindest zwei in den Zahnstangenbereich des Trägerelements und in den Zahnstangenbereich des Endfingerelements kämmend eingreifen, sodass bei einer durch das Linearantriebselement hervorgerufenen Linearbewegung des Mittelfingerelements gegenüber dem Trägerelement das Endfingerelement eine Linearbewegung durch Abrollen der Zahnräder in die Richtung der Linearbewegung des Mittelfingerelements ausführt.

Durch die Anordnung von drei oder mehreren jeweils gepaarten Zahnrädern kann ein noch längeres Ausfahren des Endfingerelements erzielt werden, wenn das in das Trägerelement eingreifende Zahnrad und das in das Endfingerelement eingreifende Zahnrad voneinander beabstandet sind und auch das Linearantriebselement ebenso durch drei miteinander gepaarte Zahnräder gebildet ist. Diese geringfügige Verlängerungsmöglichkeit kann gegebenenfalls als Ausgleich für den vorhandenen Abstand zwischen Regal und Lastaufnahmemittel bzw. Regalbediengerät genutzt werden, um wirklich auch die hinterste Position im Regallager sicher zu erreichen.

In weiterer Ausbildung der Erfindung kann das Endfingerelement ein Profil mit einem vertikal verlaufenden Schenkel und einem obenliegenden Quersteg aufweisen, auf dem ein Auflageelement zur Lastbeförderung angeordnet ist und der sich - im Querschnitt gesehen - in einem Abstand oberhalb zur Oberkante des Mittelfingerelements in Richtung des Trägerelements erstreckt. Auf diese Weise ist das Auflageelement von der Bewegung des Mittelfingerelements und vom Trägerelement völlig entkoppelt, sodass die Gewichtsbelastung des Auflageelements sich auf den Ausfahr- und Einziehvorgang entsprechend gering auswirkt.

Der Vorschub des Mittelfingerelements kann gemäß einer weiteren Ausgestaltung des erfindungsgemäßen Regalbediengeräts dadurch verwirklicht sein, dass das Mittelfingerelement an seiner Unterseite ein in Längsrichtung sich erstreckendes Zahnstangenelement aufweist, das mit dem Linearantriebselement gekoppelt ist, über welches das Mittelfingerelement gegenüber dem Trägerelement in zwei entgegengesetzten Richtungen verfahrbar ist.

Weitere vorteilhafte Ausgestaltungen der Erfindung sind in der nachfolgenden ausführlichen Beschreibung wiedergegeben.

Nachfolgend wird die Erfindung anhand des in den Zeichnungen dargestellten Ausführungsbeispiels eingehend erläutert. Es zeigt dabei
Fig.1 eine Vorderansicht einer Ausführungsform des erfindungsgemäßen Regalbediengeräts mit Regalen;
Fig.2 eine teilweise Stirnansicht einer weiteren Ausführungsform des erfindungsgemäßen Regalbediengeräts;
Fig.3 zeigt eine Schrägansicht der Ausführungsform gemäß Fig.2;
Fig.4A, 4B und 5 eine Schräg- und eine Vorderansicht eines Teleskopaufnahmefingers der Ausführungsform des erfindungsgemäßen Regalbediengeräts gemäß Fig.2;
Fig.6 eine Vorderansicht der in Fig.2 gezeigten Ausführungsform in eingebautem Zustand;
Fig.7 eine Schrägansicht von unten der in Fig.2 gezeigten Ausführungsform;
Fig.8 ein Detail aus Fig.7;
Fig.9 eine stirnseitige Ansicht eines Teleskopaufnahmefingers der Ausführungsform gemäß Fig 2.
Fig.10 eine Stirnansicht eines Bestandteils des Teleskopfingerelements gemäß Fig.9;
Fig.11 eine Stirnansicht eines weiteren Bestandteils des Teleskopfingerelements gemäß Fig.9;
Fig.12 eine schematische Gegenüberstellung eines bekannten und eines erfindungsgemäßen Teleskopaufnahmefingers;
Fig.13 ein Detail einer Schrägansicht von unten einer weiteren Ausführungsform des erfindungsgemäßen Regalbediengeräts und
Fig.14 einen Teilschnitt durch die Ausführungsform gemäß Fig.13.

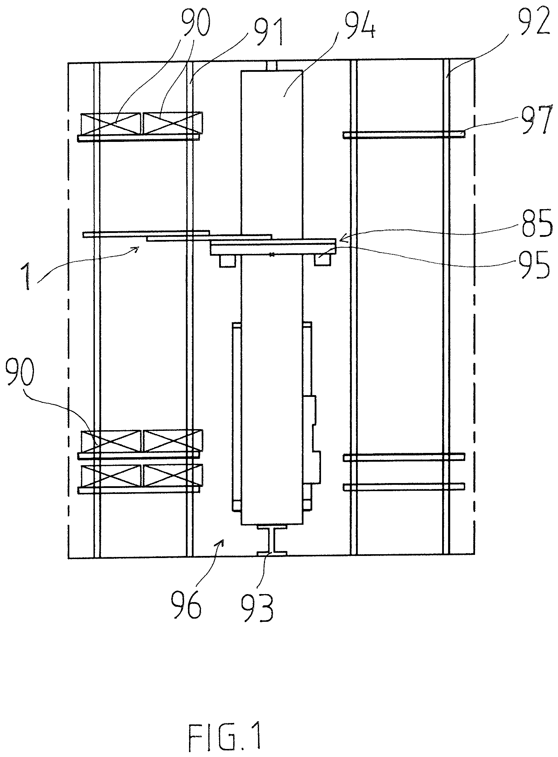

Fig.1 zeigt zwei parallel angeordnete Regale 91, 92, zwischen denen eine Regalgasse 96 ausgebildet ist, in der ein Regalbediengerät mit einem Mast 94 und einem Hubschlitten 85 entlang einer Schiene 93 horizontal verfahrbar ist. Das Regalbediengerät dient der Ein- und Auslagerung eines Ladegutes 90 in das mit Regalfächern 97 ausgestattete Regal 91 oder 92. Zu diesem Zweck ist der Hubschlitten 85 vertikal auf und ab bewegbar, sodass durch eine Horizontalbewegung des Regalbediengeräts und eine Vertikalbewegung des Hubschlittens 85, für die entsprechende Antriebseinheiten auf dem Regalbediengerät vorgesehen sind, jeder Speicherplatz der Regale 91, 92 erreichbar ist.

Auf die verwendeten, für Regalbediengeräte bekannten Steuereinrichtungen, welche eine vollautomatische Handhabung des Ladegutes 90 ermöglichen, wird nicht näher eingegangen, da deren Kenntnis vorausgesetzt wird.

Der Hubschlitten 85 weist ein Lastaufnahmemittel 95 mit mehreren nebeneinander angeordneten und einzeln steuerbaren Teleskopaufnahmefingern 1 auf, die quer zur Horizontalbewegungsrichtung des Regalbediengeräts in beide Richtungen, also sowohl in Richtung des Regals 91 als auch in Richtung des Regals 92 ausgefahren bzw. eingezogen werden können. In Fig.1 ist die in Richtung des Regals 91 ausgefahrene Stellung der Teleskopaufnahmefinger 1 gezeigt.

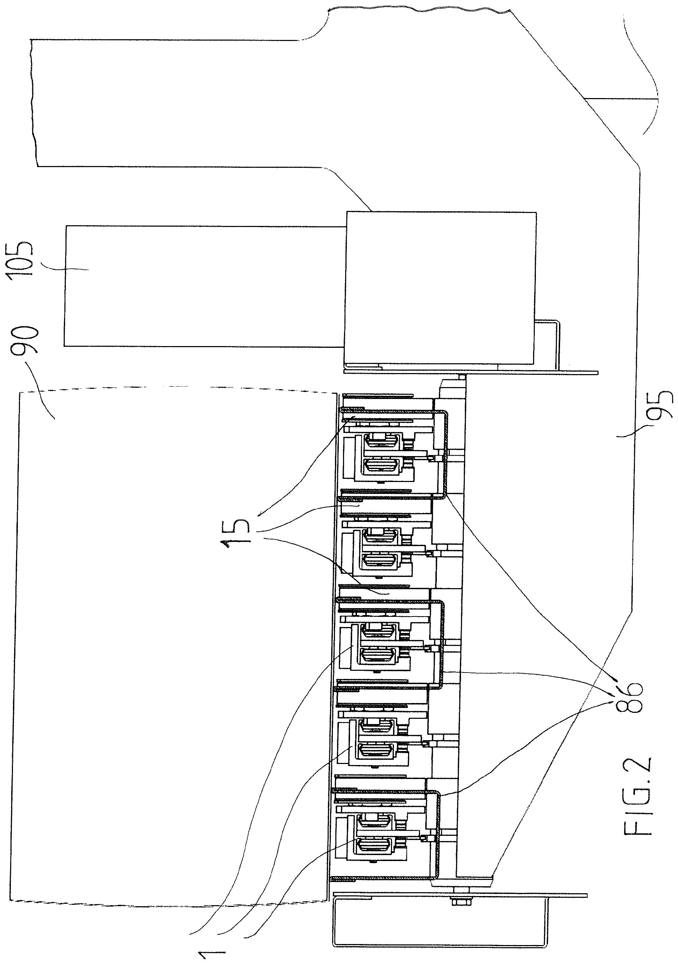

Die Regalfächerböden weisen U-Profile 86 (Fig.2) auf, in welche die Teleskopaufnahmefinger 1 eingebracht werden können, um das Ladegut 90 in das Regal 91 oder 92 einzulagern oder aus diesem auszulagern.

Je nach Breite des Ladegutes 90 kann eine unterschiedliche Anzahl an Teleskopaufnahmefingern 1 ausgefahren werden, um die Last des Ladegutes ohne Gefahr des Kippens aufnehmen zu können.

Fig.2 zeigt das Lastaufnahmemittel 95 in Form von zwei auskragenden Armen, auf denen fünf Teleskopaufnahmefinger 1 angebracht sind. Im Ausführungsbeispiel gemäß Fig.2 sind die U-Profile 86 so ausgebildet, dass jeder zweite der Teleskopaufnahmefinger 1 in diese eingebracht werden kann, um das Ladegut 90 anzuheben.

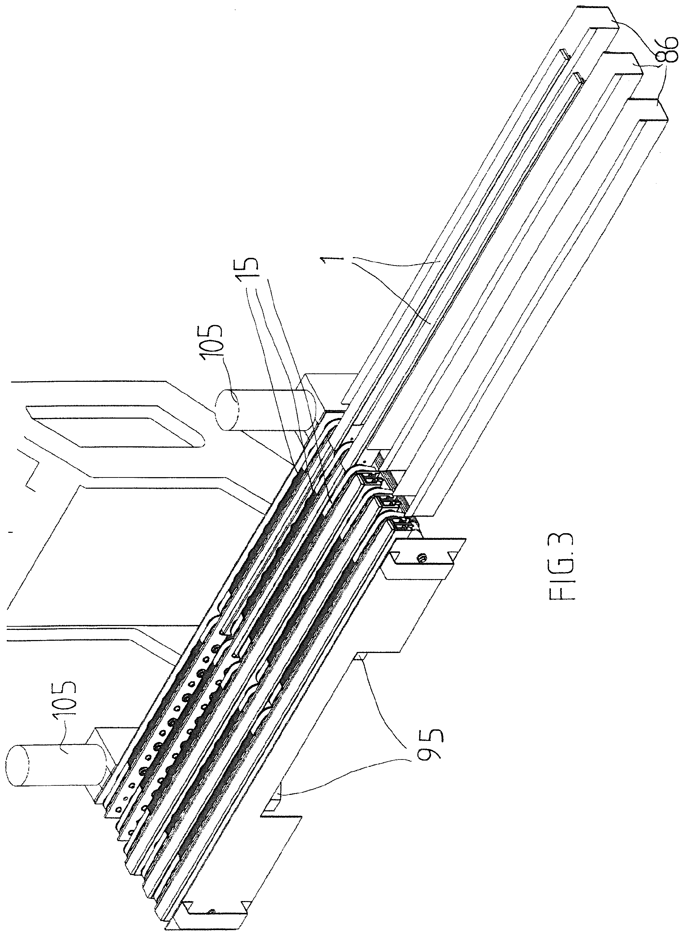

Fig.3 zeigt eine Schrägansicht des Lastaufnahmemittels 95 mit zwei ausgefahrenen Teleskopaufnahmefingern 1 der insgesamt fünf Teleskopaufnahmefinger 1. Der besseren Übersichtlichkeit halber sind die U-Profile 86 ohne Ladegut 90 gezeigt. Weiters zeigen Fig.2 und Fig.3 den Teleskopaufnahmefingern 1 zugeordnete Fördereinrichtungen 15, welche jeweils durch angetriebene, umlaufende Fördergurte gebildet sind, mit welchen das Ladegut 90 auf die ausfahrenden Teleskopaufnahmefinger 1 oder von diesen herunter bewegt werden kann.

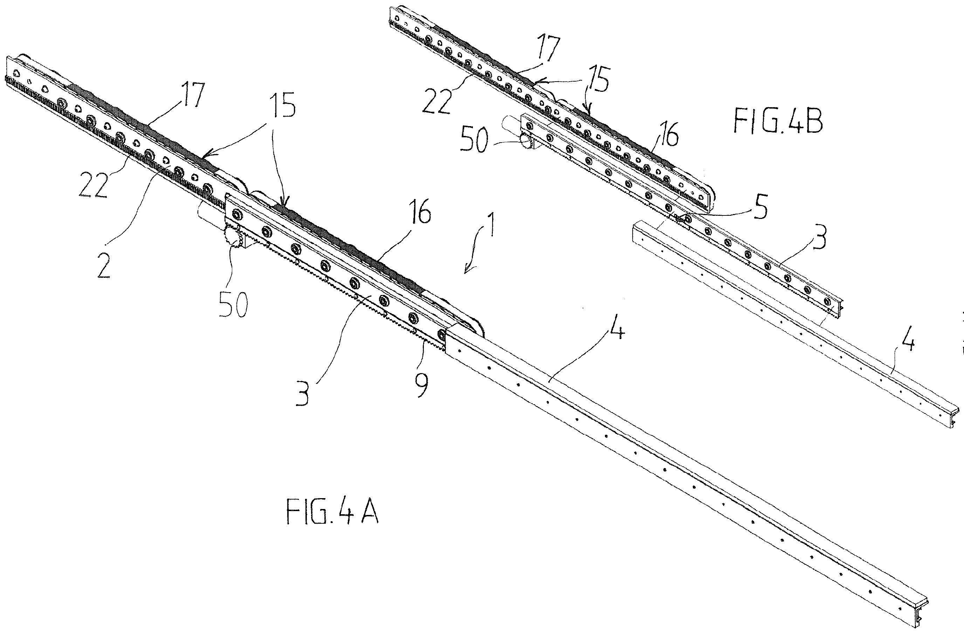

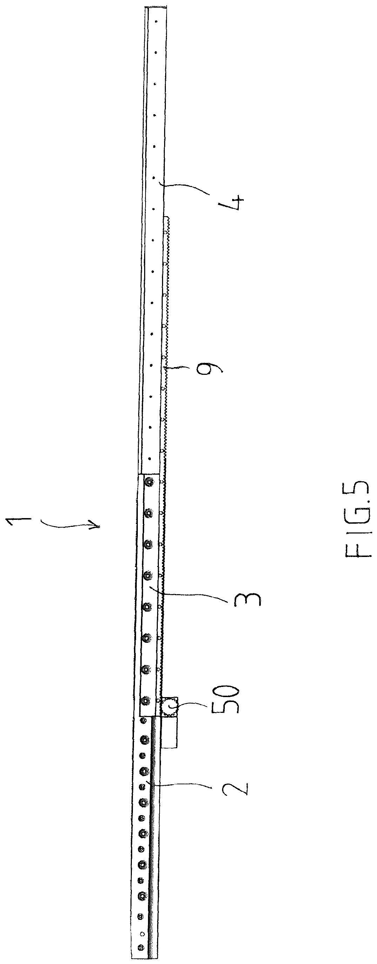

Fig.4A, 4B und 5 zeigen einen der Teleskopaufnahmefinger 1 in ausgefahrener Position mit der zugeordneten Fördereinrichtung 15. Der Teleskopaufnahmefinger 1 setzt sich aus einem Trägerelement 2, das in eingebautem Zustand gegenüber dem Lastaufnahmemittel 95 bzw. dem Hubschlitten 85 fixiert ist, sowie einem Mittelfingerelement 3 und einem Endfingerelement 4 zusammen, die gegenüber dem Trägerelement 2 in beide Längsachsenrichtungen parallel ein- und ausfahrbar sind.

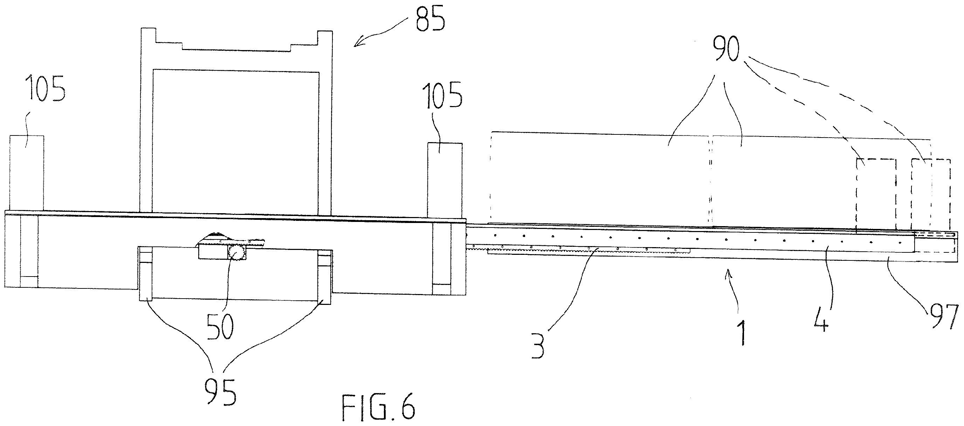

Fig.6 zeigt den eingebauten Teleskopaufnahmefinger 1 mit Ladegut 90 aus zwei Gebinden bestehend in einem Zustand, in dem dieser gerade in einem Regalfach 97 abgesenkt wird.

Erfindungsgemäß ist ein an das Mittelfingerelement 3 gekoppeltes Linearantriebselement 50 vorgesehen, mit dem eine Bewegung des Mittelfingerelements 3 in Richtung der Längsachse des Mittelfingerelements 3 erzeugbar ist, auf dem ein Kopplungselement 5 vorgesehen ist, das in Eingriff mit dem Endfingerelement 4 steht und welches die Bewegung des Mittelfingerelements 3 in eine zusätzliche gleichgerichtete Bewegung des Endfingerelements umsetzt.

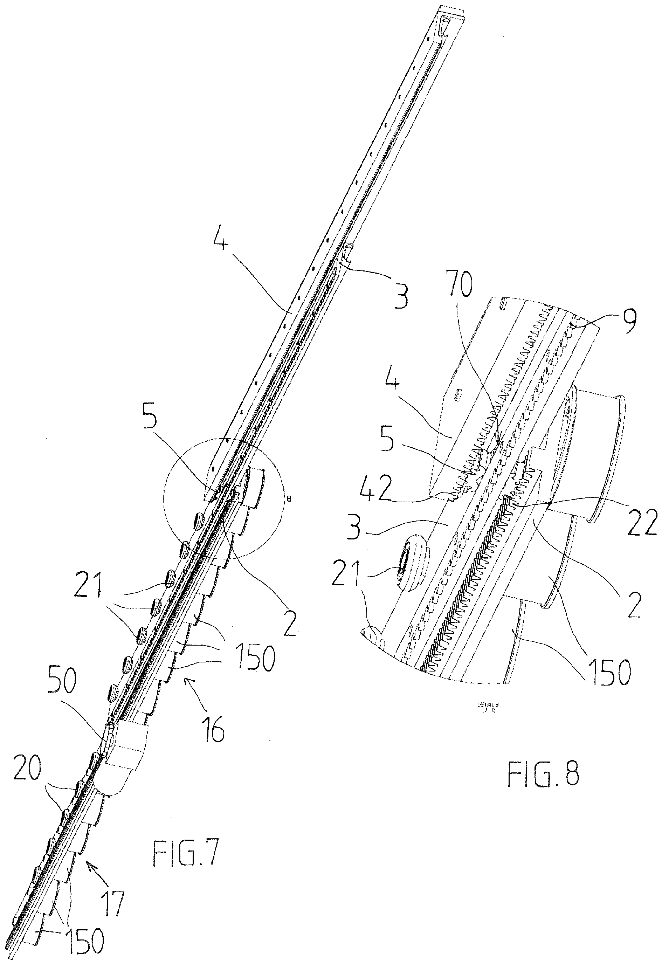

Wie in Fig.7 und 8 im Detail gezeigt, ist auf dem Trägerelement 2 und dem Endfingerelement 4 jeweils ein in Längsachsenrichtung sich erstreckender Zahnstangenbereich 22, 42 ausgebildet, die einander gegenüberliegend orientiert sind.

Über das Linearantriebselement 50 wird das Mittelfingerelement 3 gegenüber dem Lastaufnahmemittel 95 verschoben.

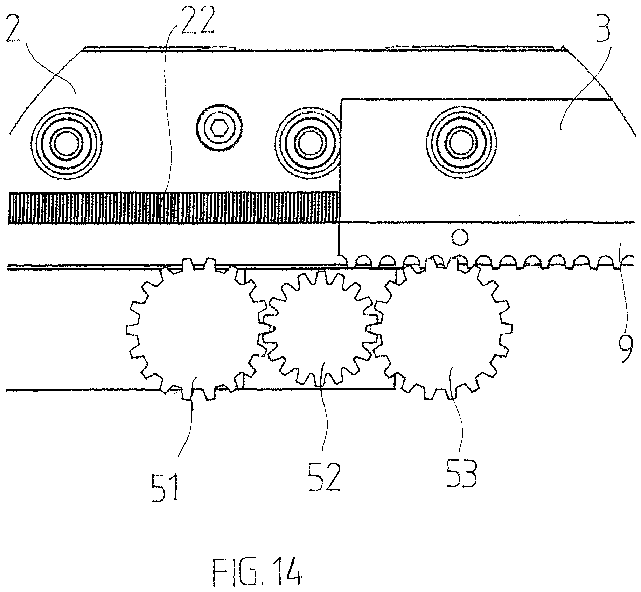

Das Kopplungselement ist in diesem Ausführungsbeispiel durch ein Zahnrad 5 gebildet. Das Kopplungselement kann aber auch, wie weiter unten genauer beschrieben, durch drei oder mehrere Zahnräder gebildet sein. Für diesen Fall ergibt sich noch eine zusätzliche Ausfahrlänge des Endfingerelements 4, wie in Fig.6 strichliert angedeutet ist, um kleinere weitere Gebinde 90, die in Fig.6 strichliert dargestellt sind, aus dem hintersten Regelbereich holen zu können. Zur Erfüllung seiner Funktion muss dabei das Linearantriebselement 50 ebenso durch drei oder mehr miteinander gepaarte Zahnräder gebildet sein (in Fig.6 nicht dargestellt), wie in Fig. 14 gezeigt.

Wieder unter Bezugnahme auf Fig.7 und 8 weist das zwischen dem Trägerelement 2 und dem Endfingerelement 4 angeordnete Mittelfingerelement 3 eine Öffnung 70 auf, in der das Zahnrad 5 drehbar gelagert ist, das in den Zahnstangenbereich 22 des Trägerelements 2 und in den Zahnstangenbereich 42 des Endfingerelements 4 kämmend eingreift, sodass bei einer durch das Linearantriebselement 50 hervorgerufenen Linearbewegung des Mittelfingerelements 3 gegenüber dem Trägerelement 2 das Endfingerelement 4 eine Linearbewegung durch Abrollen des Zahnrads 5 in die Richtung der Linearbewegung des Mittelfingerelements 3 ausführt.

Wird somit das Mittelfingerelement 3 durch das Linearantriebselement 50 (Fig.4A, 4B) gegenüber dem Trägerelement 2 in die eine oder die andere Richtung bewegt, so rollt das im Mittelfingerelement 3 drehbar gelagerte Zahnrad 5 auf der einen Seite an dem Zahnstangenbereich 22 des Trägerelementes 2 ab und verschiebt dabei durch die gegenläufige Bewegung auf der anderen Seite das Endfingerelement 4 in die gleiche Richtung.

Im gezeigten Ausführungsbeispiel weist das Endfingerelement 4 einen doppelt so großen Verfahrweg wie das Mittelfingerelement 3 auf.

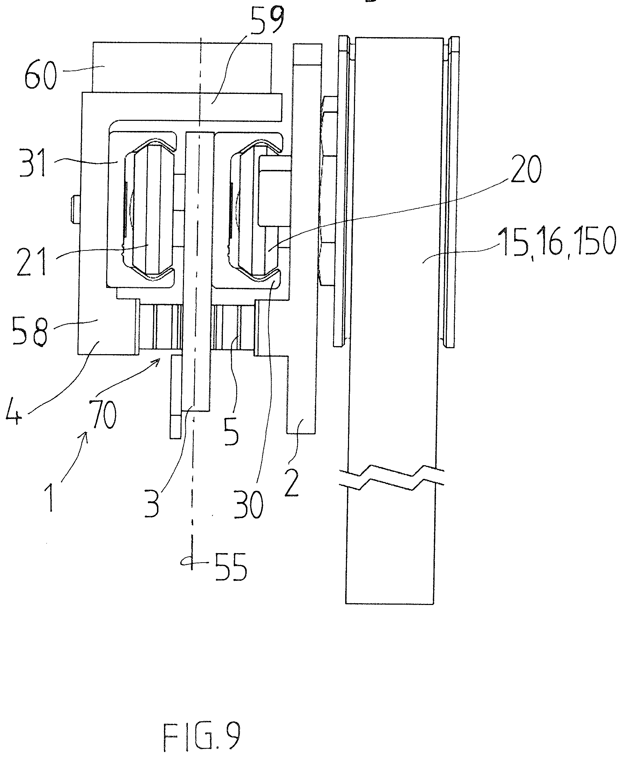

Die Drehachse 55 (Fig.9) des Zahnrads 5 erstreckt sich dabei senkrecht zur Längsachse und in der Ebene des Mittelfingerelements 3.

Das Zahnrad 5 ist auf halber Länge des Mittelfingerelements 3 angeordnet, wie aus Fig.4B und Fig.7 ersichtlich ist.

Im gezeigten Ausführungsbeispiel ist das Linearantriebselement 50 durch ein mittels Motor angetriebenes Zahnrad verwirklicht, kann aber im Rahmen der Erfindung auch anders gestaltet sein.

Wie in Fig.9 gezeigt sind zum Zwecke der besseren Verschiebbarkeit des Mittelfingerelements 3 und des Endfingerelements 4 jeweils auf einer Seite des Trägerelements 2 und des Mittelfingerelements 3 in Längsrichtung beabstandete Führungsrollen 20, 21 angeordnet, in die jeweils ein gegenüber diesen verschiebbar geführtes Führungsprofil 30, 31 eingreift.

Die Führungsprofile 30, 31 sind ihrerseits auf der dem Trägerelement 2 gegenüberliegenden Seite des Mittelfingerelements 3 bzw. der dem Mittelfingerelement 3 gegenüberliegende Seite des Endfingerelements 4 angebracht und ermöglichen somit ein reibungsarmes Gleiten auf den in sie eingreifenden Führungsrollen 20, 21.

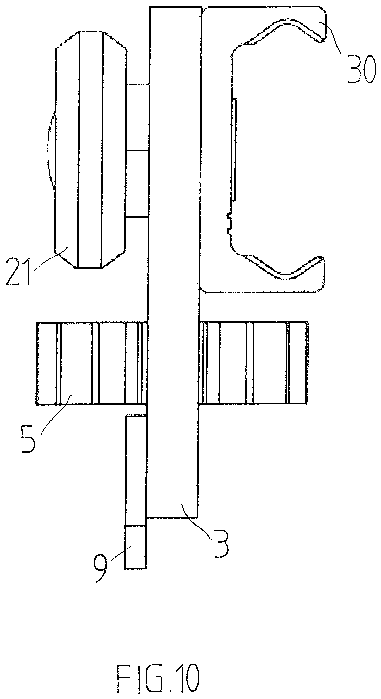

In Fig. 10 ist eine stirnseitige Ansicht des Mittelfingerelements 3 mit dem Zahnrad 5 und mit dem Führungsprofil 30 auf einer Seite und den an der gegenüberliegenden Seite angebrachten Führungsrollen 21 gezeigt. An der Unterseite des Mittelfingerelements 3 ist ein in Längsrichtung sich erstreckendes Zahnstangenelement 9 angebracht, das im eingebauten Zustand mit dem Linearantriebselement 50 gekoppelt ist, über welches das Mittelführungselement 3 gegenüber dem Trägerelement 2 in zwei entgegengesetzten Richtungen verfahrbar ist.

Das Führungsprofil 30 weist genauso wie das Führungsprofil 31 einen C-förmigen Querschnitt auf, wobei die zugehörigen Führungsrollen 20, 21 (Fig.9) als Kegelstumpfrollen ausgebildet sind, die mit ihren Kegelstumpfflächen an korrespondierenden Innenflächen der Führungsprofile 30, 31 anliegen.

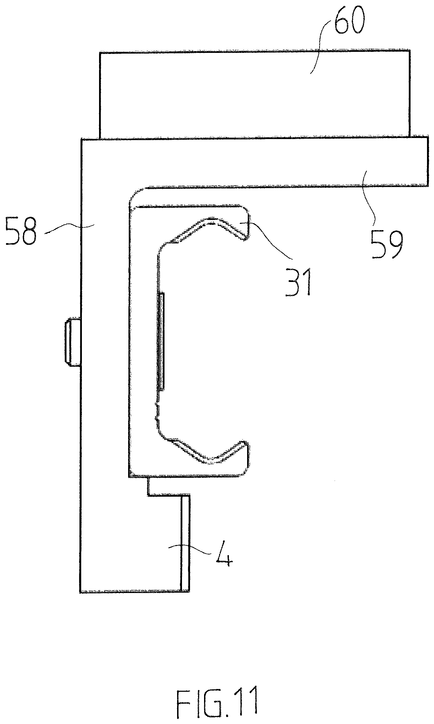

Wie in Fig.9 und teilweise Fig.11 gezeigt sind das Trägerelement 2, das Mittelfingerelement 3 und das Endfingerelement 4 nebeneinander angeordnet, wobei das Endfingerelement 4 ein Profil mit einem vertikal verlaufenden Schenkel 58 und einem obenliegenden Quersteg 59 aufweist, auf dem ein Auflageelement 60 zur Lastbeförderung angeordnet ist und der sich - im Querschnitt gesehen - in einem Abstand oberhalb zur Oberkante des Mittelfingerelements 3 in Richtung des Trägerelements 2 erstreckt.

Das Mittelfingerelement 3 ist in der Mitte zwischen dem Trägerelement 2 und dem Endfingerelement 4 angeordnet.

In Fig.9 ist ferner gezeigt, dass die dem Teleskopaufnahmefinger 1 zugeordnete Fördereinrichtung 15 an der dem Mittelfingerelement 3 abgewandten Seite des Trägerelements 2 angeordnet ist.

Im gezeigten Ausführungsbeispiel ist die Fördereinrichtung 15 aus zwei stirnseitig aneinander anschließenden Bandfördereinheiten 16, 17 (Fig.4A, 4B) gebildet, die an ihrer Oberseite einen linearen Förderweg ausbilden, der oberhalb der Oberkante des Auflageelements 60 liegt. Die Bandfördereinheiten 16, 17 weisen am Trägerelement 2 gelagerte Rollen 150 auf (Fig.7, 8), über welche ein Endlosband geführt ist, das an einer Stelle an eine Antriebseinheit 105 (Fig.2, 3) gekoppelt ist.

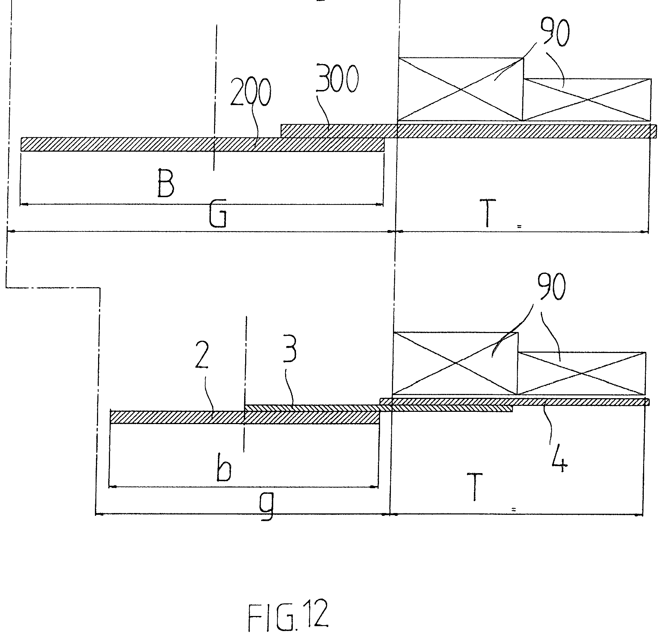

Aus der vergleichenden Darstellung gemäß Fig.12 ergibt sich ein Vorteil der Erfindung, gegenüber der obigen gezeigten herkömmlichen ausfahrbaren Anordnung, die aus Gründen der Stabilität eine relativ große Überlappung der beiden Arme 200, 300 erfordert, und damit bei gleicher Regaltiefe T eine große Breite B des Regalbediengeräts und damit verbunden eine große Ganglichte G, während in der unten gezeigten erfindungsgemäßen Anordnung die für die Auflage des Ladegutes 90 erforderliche Länge des Endfingerelements 4 ungefähr gleich der erforderlichen Breite b des Regalbediengeräts ist, wodurch sich eine sehr schmale Bauweise und dadurch eine wesentlich geringere Ganglichte g erzielen lässt.
In der Praxis ergibt sich der Vorteil einer kompakten Bauweise. So kann ein Minimalabstand von 75 mm von Fingermitte zu Fingermitte erzielt werden, wodurch das erfindungsgemäße Regalbediengerät auch bei sehr kleinen Gebinden wie Paketen, Behältnissen, ... usw., mit z.B. Abmessungen von nur 100x100mm als Aufstandsfläche einsetzbar ist, wobei zumindest zwei Finger gleichzeitig im Einsatz sein müssen, damit das Gebinde nicht kippt.

Diese kompakte Bauweise des erfindungsgemäßen Teleskopaufnahmefingers 1 gewährleistet dennoch, trotz Ausbildung der Führungsprofile 30, 31 als eine Art offene C-Profile, eine ausreichende Stabilität, da die einzelnen Teleskopelemente, wie das Führungsprofil 30 mit dem Mittelfingerelement 3 und das Führungsprofil 31 mit dem Endfingerelement 4 sowie das Trägerelement 2 mit dem Lastaufnahmemittel 95 jeweils biegesteif verbunden sind und dadurch das erforderliche Widerstandsmoment erreicht wird.

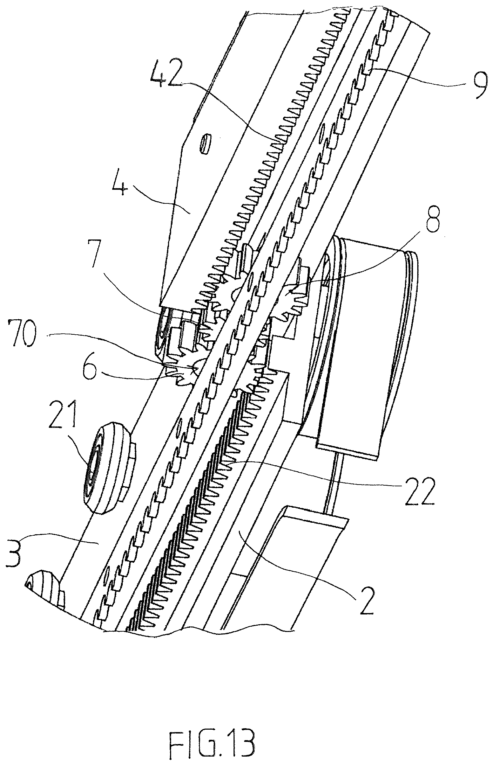

Fig. 13 und 14 zeigen eine weitere Ausführungsform des erfindungsgemäßen Regalbediengeräts, bei dem das Kopplungselement 5 durch drei miteinander gepaarte Zahnräder 6, 7, 8 gebildet ist, wobei das zwischen dem Trägerelement 2 und dem Endfingerelement 4 angeordnete Mittelfingerelement 3 eine Öffnung 70 aufweist, in der die Zahnräder 6, 7, 8 drehbar gelagert sind, von denen die äußeren Zahnräder 6, 8 in den Zahnstangenbereich 22 des Trägerelements 2 und in den Zahnstangenbereich 42 des Endfingerelements 4 kämmend eingreifen. Die Bewegung des Zahnrades 8 ist dabei über das dazwischenliegende kleinere Zahnrad 7, das nicht in die Zahnstangenbereiche 22, 42 eingreift, mit der Bewegung des Zahnrades 6 gekoppelt, sodass bei einer durch das Linearantriebselement 50 hervorgerufenen Linearbewegung des Mittelfingerelements 3 gegenüber dem Trägerelement 2 das Endfingerelement 4 eine Linearbewegung durch Abrollen der äußeren Zahnräder 6, 8 in die Richtung der Linearbewegung des Mittelfingerelements 3 ausführt. Dazu ist es aber auch erforderlich, dass bei dieser Ausführung auch das Linearantriebselement 50 durch drei miteinander gepaarte Zahnräder 51, 52, 53 gebildet ist, wobei das dazwischenliegende kleinere Zahnrad 52, das nicht in das Zahnstangenelement 9 eingreift, das Antriebszahnrad für die beiden äußeren Zahnräder 51, 53, die je nach Verfahrposition zumindest eines der beiden Zahnräder 51, 53 in das Zahnstangenelement 9 kämmend eingreifen, darstellt.

Es können auch jeweils mehr als drei Zahnräder für diese Anordnung kombiniert werden, solange eine gleichläufige Bewegung der Zahnstangenbereiche 22 und 42 bzw. des Zahnstangenelementes 9 erzielt wird und die erforderliche Stabilität der Teleskopaufnahmefinger 1 noch gegeben ist.

In der ausgefahrenen Stellung sind die Enden des Trägerelements 2 und des Endfingerelements 4 aufgrund des zwischengeschalteten kleineren Zahnrades 7 voneinander beabstandet, was eine gegenüber der vorigen Ausführungsform größere Ausziehlänge ohne merkliche Verringerung der Stabilität ermöglicht. Mit dieser geringfügigen Verlängerungsmöglichkeit kann sicher gestellt werden, dass auch sehr kleines Ladegut 90 an der hintersten Position im Regallager, wie in Fig.6 mit strichlierten Linien dargestellt, problemlos gehandhabt werden kann.
- 1.: Teleskopaufnahmefinger
- 2.: Trägerelement
- 3.: Mittelfingerelement
- 4.: Endfingerelement
- 5.: Zahnrad
- 6.: Zahnrad
- 7.: Zahnrad
- 8.: Zahnrad
- 9.: Zahnstangenelement

- 15.: Fördereinrichtung
- 16.: Förderbandeinheit
- 17.: Förderbandeinheit

- 20.: Führungsrolle
- 21.: Führungsrolle
- 22.: Zahnstangenbereich
- 23.:

- 30.: Führungsprofil
- 31.: Führungsprofil
- 32.:

- 41.:
- 42.: Zahnstangenbereich
- 43.:

- 50.: Linearantriebselement
- 51.: Zahnrad
- 52.: Zahnrad
- 53.: Zahnrad
- 54.:
- 55.: Drehachse
- 56.:
- 57.:
- 58.: Schenkel
- 59.: Quersteg
- 60.: Auflageelement

- 70.: Öffnung
- 71.:
- 72.:

- 85.: Hubschlitten
- 86.: U-Profil

- 90.: Ladegut
- 91.: Regal
- 92.: Regal
- 93.: Schiene
- 94.: Mast
- 95.: Lastaufnahmemittel
- 96.: Regalgasse
- 97.: Regalfach

- 105.: Antriebseinheit
- 106.:

- 200.: Arm
- 300.: Arm

## Patentansprüche

1. Regalbediengerät zur Ein- und Auslagerung eines Ladeguts in ein Regal bzw. aus diesem mit einem Horizontal- und einem Vertikalantrieb sowie einem Hubschlitten, der eine Lastaufnahmeeinheit mit mehreren nebeneinander angeordneten und einzeln steuerbaren Teleskopaufnahmefingern (1) sowie diesen zugeordneten Fördereinrichtungen (15) umfasst, **dadurch gekennzeichnet, dass** jeder Teleskopaufnahmefinger (1) ein gegenüber dem Hubschlitten fixiertes Trägerelement (2) sowie ein Mittelfingerelement (3) und ein Endfingerelement (4), die gegenüber dem Trägerelement (2) in beide Längsachsenrichtungen parallel ein- und ausfahrbar sind, umfasst,
- dass ein an das Mittelfingerelement (3) gekoppeltes Linearantriebselement (50) vorgesehen ist, mit dem eine Bewegung des Mittelfingerelements (3) in Richtung der Längsachse des Mittelfingerelements (3) erzeugbar ist,
- dass auf dem Mittelfingerelement (3) zumindest ein Kopplungselement (5; 6, 7, 8) vorgesehen ist, das in Eingriff mit dem Endfingerelement (4) steht und welches die Bewegung des Mittelfingerelements (3) in eine zusätzliche gleichgerichtete Bewegung des Endfingerelements umsetzt,
- dass auf dem Trägerelement (2) und dem Endfingerelement (4) jeweils ein in Längsachsenrichtung sich erstreckender Zahnstangenbereich (22, 42) ausgebildet ist, die einander gegenüberliegend orientiert sind,
- dass das zumindest eine Kopplungselement durch zumindest ein Zahnrad (5; 6, 7, 8) gebildet ist, wobei das zwischen dem Trägerelement (2) und dem Endfingerelement (4) angeordnete Mittelfingerelement (3) eine Öffnung (70) aufweist, in der das zumindest eine Zahnrad (5; 6, 7, 8) drehbar gelagert ist, das in den Zahnstangenbereich (22) des Trägerelements (2) und in den Zahnstangenbereich (42) des Endfingerelements (4) kämmend eingreift, sodass bei einer durch das Linearantriebselement (50) hervorgerufenen Linearbewegung des Mittelfingerelements (3) gegenüber dem Trägerelement (2) das Endfingerelement (4) eine Linearbewegung durch Abrollen des zumindest einen Zahnrads (5; 6, 7, 8) in die Richtung der Linearbewegung des Mittelfingerelements (3) ausführt,
- dass auf einer Seite des Trägerelements (2) und des Mittelfingerelements (3) in Längsrichtung beabstandete Führungsrollen (20, 21) angeordnet sind, in die jeweils ein gegenüber diesen verschiebbar geführtes Führungsprofil (30, 31) eingreift, das auf der dem Trägerelement (2) gegenüberliegenden Seite des Mittelfingerelements (3) bzw. der dem Mittelfingerelement (3) gegenüberliegende Seite des Endfingerelements (4) angebracht ist, und
- dass die Führungsprofile (30, 31) einen C-förmigen Querschnitt aufweisen, und dass die Führungsrollen (20, 21) als Kegelstumpfrollen ausgebildet sind, die mit ihren Kegelstumpfflächen an korrespondierenden Innenflächen der Führungsprofile (30, 31) anliegen.

2. Regalbediengerät nach Anspruch 1, **dadurch gekennzeichnet, dass** das Endfingerelement (4) einen doppelt so großen Verfahrweg wie das Mittelfingerelement (3) aufweist.

3. Regalbediengerät nach Anspruch 1 oder 2, **dadurch gekennzeichnet, dass** die Drehachse des zumindest einen Zahnrads (5; 6,7,8) sich senkrecht zur Längsachse und in der Ebene des Mittelfingerelements (3) erstreckt.

4. Regalbediengerät nach Anspruch 1, 2 oder 3, **dadurch gekennzeichnet, dass** das zumindest eine Zahnrad (5;6,7,8) ungefähr auf halber Länge des Mittelfingerelements (3) angeordnet ist.

5. Regalbediengerät nach Anspruch 1, **dadurch gekennzeichnet, dass** das zumindest eine Zahnrad durch drei oder mehrere miteinander gepaarte Zahnräder (6, 7, 8) gebildet ist, wobei die Zahnräder (6, 7, 8) in der Öffnung (70) drehbar gelagert sind, von denen zumindest zwei (6, 8) in den Zahnstangenbereich (22) des Trägerelements (2) und in den Zahnstangenbereich (42) des Endfingerelements (4) kämmend eingreifen, sodass bei einer durch das Linearantriebselement (50) hervorgerufenen Linearbewegung des Mittelfingerelements (3) gegenüber dem Trägerelement (2) das Endfingerelement (4) eine Linearbewegung durch Abrollen der Zahnräder (6, 8) in die Richtung der Linearbewegung des Mittelfingerelements (3) ausführt.

6. Regalbediengerät nach Anspruch 5, **dadurch gekennzeichnet, dass** auch das Linearantriebselement (50) durch drei miteinander gepaarte Zahnräder (51, 52, 53) gebildet ist, wobei das dazwischenliegende kleinere Zahnrad (52), das nicht in das Zahnstangenelement (9) eingreift, das Antriebszahnrad für die beiden äußeren Zahnräder (51, 53), die je nach Verfahrposition zumindest eines der beiden Zahnräder (51, 53) in das Zahnstangenelement (9) kämmend eingreifen, darstellt.

7. Regalbediengerät nach einem der Ansprüche 1 bis 6, **dadurch gekennzeichnet, dass** das Endfingerelement (4) ein Profil mit einem vertikal verlaufenden Schenkel (58) und einem obenliegenden Quersteg (59) aufweist, auf dem ein Auflageelement (60) zur Lastbeförderung angeordnet ist und der sich - im Querschnitt gesehen - in einem Abstand oberhalb zur Oberkante des Mittelfingerelements (3) in Richtung des Trägerelements (2) erstreckt.

8. Regalbediengerät nach einem der Ansprüche 1 bis 7, **dadurch gekennzeichnet, dass** das Mittelfingerelement (3) an seiner Unterseite ein in Längsrichtung sich erstreckendes Zahnstangenelement (9) aufweist, das mit dem Linearantriebselement (50) gekoppelt ist, über welches das Mittelfingerelement (3) gegenüber dem Trägerelement (2) in zwei entgegengesetzten Richtungen verfahrbar ist.

9. Regalbediengerät nach einem der Ansprüche 1 bis 8, **dadurch gekennzeichnet, dass** die der Teleskopaufnahmefinger (1) zugeordnete Fördereinrichtung an der dem Mittelfingerelement (3) abgewandten Seite des Trägerelements (2) angeordnet ist.

10. Regalbediengerät nach einem der Ansprüche 1 bis 9, **dadurch gekennzeichnet, dass** die Fördereinrichtung aus zwei stirnseitig aneinander anschließenden Bandfördereinheiten gebildet ist, die an ihrer Oberseite einen linearen Förderweg ausbilden, der oberhalb der Oberkante des Auflageelements liegt.

11. Regalbediengerät nach einem der vorhergehenden Ansprüche, **dadurch gekennzeichnet, dass** das Mittelfingerelement (3) in der Mitte zwischen dem Trägerelement (2) und dem Endfingerelement (4) angeordnet ist.

## Claims

1. A storage and retrieval device for storing and retrieving a load in/from a rack having a horizontal and a vertical drive and a lifting carriage comprising a load receiving unit with several telescopic receiving fingers (1) which are arranged next to each other and are individually controllable and conveying means (15) assigned to said telescopic receiving fingers (1), **characterized in that**
- each telescopic receiving finger (1) comprises a carrier element (2) fixed in relation to said lifting carriage and a middle finger element (3) and an end finger element (4) which are extensible in relation to said carrier element (2) and retractable parallel to each other in both directions of the longitudinal axis,
- a linear drive element (50) coupled to the middle finger element (3) with which a movement of said middle finger element (3) in a direction of the longitudinal axis of said middle finger element (3) can be generated,
- at least one coupling element (5; 6, 7, 8) which is engaged with said end finger element (4) and converts the movement of said middle finger element (3) into an additional aligned movement of said end finger element is provided on said middle finger element (3),
- a toothed rack area (22, 42) extending in the direction of the longitudinal axis is formed on each of said carrier element (2) and said end finger element (4), said two toothed rack areas (22, 42) being oriented opposite to one another,
- said at least one coupling element is formed by at least one toothed gear (5; 6, 7, 8), said middle finger element (3) arranged between said carrier element (2) and said end finger element (4) having an opening (70) in which said at least one toothed gear (5; 6, 7, 8) is rotatably supported, said at least toothed gear (5; 6, 7, 8) being in meshing engagement with the toothed rack area (22) of said carrier element (2) and the toothed rack area (42) of the end finger element (4), so that in case of a linear movement of the middle finger element (3) in relation to said carrier element (2) caused by the linear drive element (50) the end finger element (4) carries out a linear movement by rolling said at least one toothed gear (5; 6, 7, 8) in the direction of said linear movement of the middle finger element (3),
- guiding rolls (20, 21) are arranged on one side of said carrier element (3) and said middle finger element (3), said guiding rolls (20, 21) being spaced apart in the longitudinal direction, each of said guiding rolls (20, 21) being engaged by a guiding profile (30, 31) which is mounted on the side of the middle finger element (3) opposite the carrier element (2) or on the side of the end finger element (4) opposite said middle finger element (3) and is arranged slidably opposite said rolls, and
- said guiding profiles (30, 31) have a C-shaped cross section and said guiding rolls (20, 21) being formed as truncated conical rolls whose truncated cone surfaces abut against corresponding inner surfaces of said guiding profiles (30, 31).

2. The storage and retrieval device according to claim 1, **characterized in that** the way said end finger element (4) travels is twice as long as that of said middle finger element (3).

3. The storage and retrieval device according to claim 1 or claim 2, **characterized in that** the rotation axis of said at least one toothed gear (5; 6, 7, 8) extends vertically to said longitudinal axis and in the same plane as said middle finger element (3).

4. The storage and retrieval device according to any one of the claims 1, 2 or 3, **characterized in that** said at least one toothed gear (5; 6, 7, 8) is arranged approximately halfway along said middle finger element (3).

5. The storage and retrieval device according to claim 1, **characterized in that** said at least one toothed gear is formed by three or more paired toothed gears (6, 7, 8), said toothed gears (6, 7, 8) being rotatably supported in said opening (70), at least two of them (6, 8) being in mesh engagement with the toothed rack area (22) of said carrier element (2) and the toothed rack area (42) of said end finger element (4), so that in case of a linear movement of the middle finger element (3) in relation to said carrier element (2) caused by the linear drive element (50) the end finger element (4) carries out a linear movement by rolling said toothed gears (6, 8) in the direction of said linear movement of the middle finger element (3).

6. The storage and retrieval device according to claim 5, **characterized in that** the linear drive element (50) is also formed by three paired toothed gears (51, 52, 53), the smaller toothed gear (52) arranged in the middle which does not engage with said toothed rack element (9) being the driving gear of the two outer toothed gears (51, 53), at least one of which, depending on their position along the travel path, being in mesh engagement with the toothed rack element (9).

7. The storage and retrieval device according to any one of the claims 1 to 6, **characterized in that** said end finger element (4) has a profile with a vertically extending leg (58) and an upper crossbar (59) on which a support element (60) for transporting loads is arranged and which, in a cross-sectional view, extends above the upper edge of said middle finger element (3), spaced apart thereof, in the direction of said carrier element (2).

8. The storage and retrieval device according to any one of the claims 1 to 7, **characterized in that** said middle finger element (3) has a toothed rack element (9) on its bottom surface which extends in the longitudinal direction and is coupled to said linear drive element (50), which makes the middle finger element (3) movable in relation to said carrier element (2) in two opposite directions.

9. The storage and retrieval device according to any one of the claims 1 to 8, **characterized in that** the conveying means assigned to said telescopic receiving fingers (1) is arranged on that side of said carrier element (2) which faces away from said middle finger element (3).

10. The storage and retrieval device according to any one of the claims 1 to 9, **characterized in that** said conveying means is formed by two band conveyor units being arranged end to end, said band conveyor units forming on their top surface a linear conveying path above the upper edge of said support element.

11. The storage and retrieval device according to any one of the preceding claims, **characterized in that** said middle finger element (3) is arranged at the center between said carrier element (2) and said end finger element (4).

## Revendications

1. Dispositif de transstockage pour le stockage et le déstockage d'une charge dans une étagère et/ou de celle-ci, avec un entrainement horizontal et un entrainement vertical ainsi qu'un chariot de levage, qui comprend une unité de réception de la charge avec plusieurs doigts de réception télescopiques (1), disposés les uns à côté des autres et pouvant être commandés individuellement, et des moyens convoyeurs (15) assignés à ceux-ci, **caractérisé en ce que**
- chaque doigt de réception télescopique (1) comprend un élément de support (2) fixé par rapport au chariot de levage ainsi qu'un élément de doigt central (3) et un élément de doigt terminal (4), pouvant être rentrés et sortis parallèlement dans les deux directions de l'axe longitudinale par rapport à l'élément de support (2),
- un élément d'entrainement linéaire (50) couplé à l'élément de doigt central (3) est prévu, avec lequel peut être généré un mouvement de l'élément de doigt central (3) dans la direction de l'axe longitudinal de l'élément de doigt central (3),
- sur l'élément de doigt central (3) est prévu au moins un élément d'accouplement (5 ; 6, 7, 8), qui est engagé avec l'élément de doigt terminal (4) et qui transforme le mouvement de l'élément de doigt central (3) en mouvement supplémentaire aligné de l'élément de doigt terminal,
- une zone de crémaillère (22, 42) est formée respectivement sur l'élément de support (2) et l'élément de doigt terminal (4), s'étendant dans la direction de l'axe longitudinal, les zones respectives étant orientées l'une en face de l'autre,
- au moins un élément d'accouplement est formé par au moins une roue dentée (5 ; 6, 7, 8), l'élément de doigt central (3), disposé entre l'élément de support (2) et l'élément de doigt terminal (4), présentant une ouverture (70), dans laquelle l'au moins une roue dentée (5 ; 6, 7, 8), qui engraine avec la zone de crémaillère (22) de l'élément de support (2) et avec la zone de crémaillère (42) de l'élément de doigt terminal (4), est montée de façon rotative, de sorte que, lors d'un mouvement linéaire de l'élément de doigt central (3), produit par l'élément d'entrainement linéaire (50), par rapport à l'élément de support (2), l'élément de doigt terminal (4) effectue un mouvement linéaire par rotation de l'au moins une roue dentée (5 ; 6, 7, 8) dans la direction du mouvement linéaire de l'élément de doigt central (3),
- des rouleaux de guidage (20, 21) sont disposés de façon espacée sur un côté de l'élément (2) de support et de l'élément de doigt central (3) en direction longitudinale, dans chacun desquels s'engage un profil de guidage (30, 31), guidé en face de ceux-ci de façon déplaçable, qui est monté sur le côté de l'élément de doigt central (3) en face de l'élément de support (2) et/ou sur le côté de l'élément de doigt terminal (4) en face de l'élément de doigt central (3), et **en ce que**
- les profils de guidage (30, 31) ont une section transversale en forme de C et **en ce que** les rouleaux de guidage (20, 21) sont formés comme rouleaux tronconiques, dont les faces tronconiques aboutissent contre des faces intérieures correspondantes des profils de guidage (30, 31).

2. Dispositif de transstockage selon la revendication 1, **caractérisé en ce que** l'élément de doigt terminal (4) a un trajet de déplacement deux fois plus long que l'élément de doigt central (3).

3. Dispositif de transstockage selon les revendications 1 ou 2, **caractérisé en ce que** l'axe de rotation de l'au moins une roue dentée (5 ; 6, 7, 8) s'étend perpendiculairement à l'axe longitudinal et dans le plan de l'élément de doigt central (3).

4. Dispositif de transstockage selon les revendications 1, 2 ou 3, **caractérisé en ce que** l'au moins une roue dentée (5 ; 6, 7, 8) est disposée environ à la moitié de la longueur de l'élément de doigt central (3).

5. Dispositif de transstockage selon la revendication 1, **caractérisé en ce que** l'au moins une roue dentée est formée par trois ou plusieurs couples de roues dentées (6, 7, 8), les roues (6, 7, 8) étant montées de façon rotative dans l'ouverture (70), dont au moins deux (6, 8) coopèrent avec la zone de crémaillère (22) de l'élément de support (2) et avec la zone de crémaillère (42) de l'élément de doigt terminal (4), de sorte que, lors d'un mouvement linéaire de l'élément de doigt central (3), produit par l'élément d'entrainement linéaire (50), par rapport à l'élément de support (2), l'élément de doigt terminal (4) effectue un mouvement linéaire par rotation des roues dentées (6, 8) dans la direction du mouvement linéaire de l'élément de doigt central (3).

6. Dispositif de transstockage selon la revendication 5, **caractérisé en ce que** l'élément d'entrainement linéaire (50) est, lui aussi, formé par trois couples de roues dentées (51, 52, 53), la roue dentée (52) plus petite, disposée au milieu, qui ne s'engage pas dans l'élément de crémaillère (9), représentant la roue dentée d'entrainement pour les deux roues dentées (51, 53) extérieures, qui coopèrent avec l'élément de crémaillère (9) en fonction de la position d'au moins une des deux roues dentées (51, 53) dans le trajet de déplacement.

7. Dispositif de transstockage selon l'une quelconque des revendications 1 à 6, **caractérisé en ce que** l'élément de doigt terminal (4) a un profil avec une branche verticale et une traverse (58) supérieure, sur laquelle est disposé un élément d'appui (60) pour le convoi des charges et qui - vue en section transversale - s'étend vers l'élément de support (2) de façon espacée de et au-dessus du bord supérieur de l'élément de doigt central (3).

8. Dispositif de transstockage selon l'une quelconque des revendications 1 à 7, **caractérisé en ce que** l'élément de doigt central (3) a un élément de crémaillère (9) sur sa face inférieure, qui s'étend en direction longitudinale et qui est couplé avec l'élément d'entrainement linéaire (50), à travers lequel l'élément de doigt central (3) peut être déplacé par rapport à l'élément de support (2) dans deux directions opposées.

9. Dispositif de transstockage selon l'une quelconque des revendications 1 à 8, **caractérisé en ce que** le moyen convoyeur assigné aux doigts de réception télescopiques (1) est disposé sur le côté de l'élément de support (2) qui ne se trouve pas en face de l'élément de doigt central (3).

10. Dispositif de transstockage selon l'une quelconque des revendications 1 à 9, **caractérisé en ce que** le moyen convoyeur est formé de deux unités de convoyeur à bande disposées bout-à-bout, qui, sur leur face supérieure, forment un trajet de convoi linéaire au-dessus du bord supérieur de l'élément d'appui.

11. Dispositif de transstockage selon l'une quelconque des revendications précédentes, **caractérisé en ce que** l'élément de doigt central (3) est disposé au milieu entre l'élément de support (2) et l'élément de doigt terminal (4).
